**Europäisches Patentamt**

(19) **European Patent Office**

**Office européen des brevets**

(11) Veröffentlichungsnummer : **0 343 373 B1**

(12) # EUROPÄISCHE PATENTSCHRIFT

(45) Veröffentlichungstag der Patentschrift :
18.09.91 Patentblatt 91/38

(51) Int. Cl.⁵ : **G01D 5/245**, G01D 5/249, G01P 21/02

(21) Anmeldenummer : 89107031.0

(22) Anmeldetag : 19.04.89

(54) **Verfahren zur Überwachung von Impulsdrahtsensoren eines Umdrehungsgebers auf Sensorleitungskurzschluss und Schaltungsanordnung zur Durchführung des Verfahrens.**

(30) Priorität : 03.05.88 DE 3815024

(43) Veröffentlichungstag der Anmeldung :
29.11.89 Patentblatt 89/48

(45) Bekanntmachung des Hinweises auf die
Patenterteilung :
18.09.91 Patentblatt 91/38

(84) Benannte Vertragsstaaten :
**DE FR GB IT**

(56) Entgegenhaltungen :
EP-A- 0 034 839

(56) Entgegenhaltungen :
EP-A- 0 096 304
EP-A- 0 231 474
DE-A- 2 942 891
DE-A- 3 436 750
DE-A- 3 441 103

(73) Patentinhaber : **Siemens Aktiengesellschaft
Wittelsbacherplatz 2
W-8000 München 2 (DE)**

(72) Erfinder : **Donat, Albrecht, Dipl.-Ing.
Meilwaldstrasse 4
W-8526 Bubenreuth (DE)**
Erfinder : **Drechsel, Wolfgang, Dipl.-Ing.(FH)
Freiherr-vom-Stein-Strasse 9
W-8586 Gefrees (DE)**

## Beschreibung

Die Erfindung bezieht sich auf ein Verfahren zur Überwachung eines aus n Impulsdrahtsensoren bestehenden, starr mit einem Lagegeber verbundenen Umdrehungsgebers auf Sensorleitungskurzschluß, wobei jeder Impulsdrahtsensor pro Umdrehung ein Impulssignal und der Lagegeber pro Umdrehung n Sektorsignale mit jeweils einem linken bzw. rechten Sektorrandsignal und einem Resetsignal erzeugen, wobei jedes Sektorsignal einen der n Sektoren einer Umdrehung kodiert, und auf eine Schaltungsanordnung zur Durchführung des Verfahrens.

Aus der deutschen Offenlegungsschrift DE-OS 3544452 ist eine Einrichtung zur Absolutwegerfassung bekannt, die mit einem über einen vorgegebenen Meßweg eine Vielzahl von Umdrehungen ausführenden Lagegeber versehen ist, wobei der Lagegeber jeweils ein seiner Winkelstellung entsprechendes Lagesignal abgibt. Der Lagegeber ist außerdem starr mit einem Umdrehungsgeber verbunden, der unter Anwendung des Wiegand-Effekts pro Umdrehung eine vorgegebene Anzahl von in ihrer Amplitude geschwindigkeitsunabhängigen Spannungsstößen abgibt. Eine Verarbeitungseinrichtung überlagert die jeweilige Anzahl von Umdrehungen mit der jeweiligen Lage innerhalb einer Umdrehung zu einem Absolutweg. Dadurch ist eine sichere und technisch unkomplizierte Möglichkeit · der Absolutwegerfassung über den vollen Meßweg gegeben.

Ein Umdrehungsgeber, der unter Zugrundelegung des Wiegand-Effektes arbeitet, ist aus dem Aufsatz "Theorie und Praxis der Wiegand-Sensoren" von Dr. rer. nat. G. Kuërs, abgedruckt in Sonderdruck "Der Konstrukteur", Januar/Februar, März 1983, Verlag für Technik und Wirtschaft, Wiesbaden, bekannt. Der Vorteil derartiger Sensoren liegt darin, daß diese ohne eine gesonderte Stromversorgungseinrichtung einen Spannungsimpuls liefern, dessen Amplitude im Gegensatz zu denen eines Induktivgebers unabhängig von der Relativgeschwindigkeit zwischen feststehendem und bewegtem Teil des Meßsystems ist. Dabei sind die Impulsdrahtsensoren für einen sehr großen Temperturbereich einsetzbar. Außerdem besteht ein hoher Signal-/Rauschabstand und die Ausgänge der Impulsdrahtsensoren sind kurzschlußsicher. Bei der Anordnung von Magnet, Wiegand-Draht und zugehöriger Spule eines solchen Systems ist es sowohl möglich, daß der Wiegand-Draht beweglich angeordnet und der Magnet mit der Sensorspule ortsfest ist, ebenso kann auch eine Anordnung auf beweglichem Magnet und feststehendem Wiegand-Draht mit zugehöriger Spule vorgesehen sein.

Da bei nur einem Sensor eine Drehrichtung des Umdrehungsgebers nicht erfaßt werden kann, erweist sich eine Anordnung, bestehend aus n Impulsdrahtsensoren, vorzugsweise drei, die über den Umfang des Umdrehungsgebers angeordnet sind, als vorteilhaft. Dadurch erzeugt der Umdrehungsgeber während einer Umdrehung n, vorzugsweise drei, Spannungsstöße bzw. Impulssignale. Jeder Impulsdrahtsensor ist in einem Sektor angeordnet, wobei vom Lagegeber ein korrespondierendes Sektorsignal erzeugt wird.

Beim Einsatz dieser Einrichtung zur Absolutwegerfassung in der Robotertechnik muß sichergestellt werden, daß die vom Lagegeber und die von mit diesem starr verbundenen Umdrehungsgeber erzeugten Signale auch tatsächlich zur Ermittlung des Absolutweges der Impulsverarbeitungsschaltung anstehen, und nicht infolge eines Leitungskurzschlusses verschluckt werden, wodurch der Absolutweg nicht mehr einwandfrei ermittelt werden kann.

Der Erfindung liegt nun die Aufgabe zugrunde, ein Verfahren zur Überwachung der n Impulsdrahtsensoren eines Umdrehungsgebers auf Sensorleitungskurzschluß und eine Schaltungsanordnung zur Durchführung dieses Verfahrens anzugeben.

Diese Aufgabe wird erfindungsgemäß dadurch gelöst, daß jeweils während einer Umdrehung jeder Sektor auf Vorhandensein seines korrespondierenden Impulssignals untersucht wird, wobei eine Anzeige angesteuert wird, sobald eines der n Impulssignale nicht vorhanden ist.

Durch die Abfrage jedes Sektors kann unabhängig von der Drehrichtung festgestellt werden, ob in jedem Sektor ein korrespondierendes Impulssignal vom Umdrehungsgeber erzeugt und am Eingang einer Impulsverarbeitungsschaltung ansteht. Sobald ein Impuls nicht am Eingang dieser Impulsverarbeitungsschaltung ansteht, erfolgt eine Ansteuerung einer Anzeige. Eine kurzzeitige Fehlermeldung kann für eine weitere Auswertung abgespeichert werden. Bei einer Fehlermeldung kann auf Leitungskurzschluß oder Defekt eines Impulsdrahtsensors geschlossen werden, wodurch die Ermittlung eines Absolutweges nicht mehr einwandfrei möglich ist.

Bei einer Schaltungsanordnung zur Durchführung des Verfahrens mit einem aus n Impulsdrahtsensoren bestehenden, starr mit einem Lagegeber verbundenen Umdrehungsgeber, wobei jeder Impulsdrahtsensor pro Umdrehung ein Impulssignal und der Lagegeber pro Umdrehung n Sektorsignale mit jeweils einem linken bzw. rechten Sektorrandsignal und einem Resetsignal erzeugen, ist jedes Sektorsignal einem ersten Eingang eines UND-Gatters zugeführt, wobei an dessen zweiten Eingang jeweils ein Impulssignal ansteht, sind die Ausgänge der n UND-Gatter jeweils mit einem Eingang eines nachfolgenden ODER-Gatters verknüpft, wobei einem weiteren Eingang des ODER-Gatters das Resetsignal zugeführt ist, sind ein erstes und ein zweites RS-Flip-Flop vorgesehen, deren Reset-Eingänge mit dem Ausgang des UND-Gatters verknüpft sind, wobei am Set-Eingang des ersten RS-Flip-Flops das linke Sektorrandsignal und am Set-Eingang des zweiten RS-Flip-Flops das rechte Sektorrandsignal ansteht, ist dem ersten bzw. dem zweiten RS-Flip-Flop ein UND-Gatter nachgeschaltet, an dessen zweiten Eingang das rechte bzw. linke Sektorrandsignal ansteht, und sind die Ausgänge dieser UND-Gatter jeweils mit einem Eingang eines nachgeschalteten ODER-Gatters verknüpft, dessen Ausgang mit einer Anzeige verbunden ist.

Durch den Aufbau dieser Schaltungsanordnung kann man mit wenigen und einfachen Gattern und zweier RS-Flip-Flops jeden Sektor einer Umdrehung beliebiger Drehrichtung auf Vorhandensein eines korrespondierenden Impulssignal abfragen. Dabei wird der Sektor durch ein linkes und ein rechtes Sektorrandsignal bestimmt. Die beiden RS-Flip-Flops werden mit Hilfe des Ausgangssignals des ODER-Gatters immer wieder am Anfang eines Sektors in die Grundstellung gebracht, damit auch tatsächlich der anstehende Sektor auf Impulssignale abgefragt werden kann. Außerdem werden die beiden RS-Flip-Flops spätestens dann zurückgesetzt, wenn der zu untersuchende Sektor nach rechts oder links wieder verlassen wird. Das erste RS-Flip-Flop ist für die Überwachung bei einer Rechtsdrehung des Umdrehungsgebers und das zweite RS-Flip-Flop ist für die Überwachung bei einer Linksdrehung des Umdrehungsgebers vorgesehen. Bei der Überwachung auf erzeugte und übermittelte Impulssignale wird das erste RS-Flip-Flop bzw. das zweite RS-Flip-Flop vom linken bzw. rechten Sektorrandsignal gesetzt, wodurch ein erstes bzw. zweites nachgeschaltetes UND-Gatter das linke bzw. rechte Sektorrandsignal mit dem rechten bzw. linken Sektorrandsignal vergleicht, wenn das erste bzw. zweite RS-Flip-Flop nicht zurückgesetzt worden ist. Nur wenn jeweils ein Impulssignal im zu überwachenden Sektor an der Schaltungsanordnung zur Druchführung des Verfahrens ansteht, werden die beiden RS-Flip-Flop zurückgesetzt.

Sobald in einem der n Sektoren kein Impulssignal vom Umdrehungsgeber erzeugt wird bzw. am Ausgang einer Impulsaufbereitungsschaltung bereitsteht, kann noch nicht eindeutig daraus geschlossen werden, daß der Impuls bei der Übertragung infolge eines Übertragungsfehlers oder infolge eines Leitungskurzschlusses verschluckt wurde. Jedoch kann damit innerhalb einer Umdrehung festgestellt werden, ob alle n Impulssignale des Umdrehungsgebers an den Ausgängen einer Impulsaufbereitungsschaltung anstehen. Bleibt jedoch auch bei weiteren Umdrehungen ein Impulssignal verschluckt, so kann auf Leitungskurzschluß zwischen Umdrehungsgeber und Impulsaufbreitungsschaltung bzw. auf eine Zerstörung eines Impulsdrahtsensors des Umdrehungsgebers geschlossen werden.

Somit kann man mit diesem Verfahren und mit dieser Schaltungsanordnung zur Druchführung dieses Verfahrens die vom Lagegeber und Umdrehungsgeber bei beliebiger Drehrichtung erzeugten Signale auf Vorhandensein überwachen, wodurch erst eine Absolutwegermittlung möglich ist.

Zur weiteren Erläuterung der Erfindung wird auf die Zeichnung Bezug genommen, in der ein Ausführungsbeispiel nach der Erfindung schematisch veranschaulicht ist.

FIG 1 zeigt eine Einrichtung zur Absolutwegerfassung mit einer Schaltungsanordnung zur Durchführung des erfindungsgemäßen Verfahrens, in

FIG 2 ist ein rechtes Sektorrandsignal in einem Diagramm über der Periode dargestellt, in

FIG 3 ist ein linkes Sektorrandsignal in einem Diagramm über der Periode veranschaulicht, in

FIG 4 ist ein Resetsignal in einem Diagramm über der Periode dargestellt, in den

FIG 5 bis 7 ist jeweils ein Sektorsignal in einem Diagramm über der Periode veranschaulicht, in den

FIG 8 bis 10 ist jeweils ein Impulssignal in einem Diagramm über der Periode veranschaulicht und in der

FIG 11 ist ein Fehlersignal in einem Diagramm über der Periode veranschaulicht.

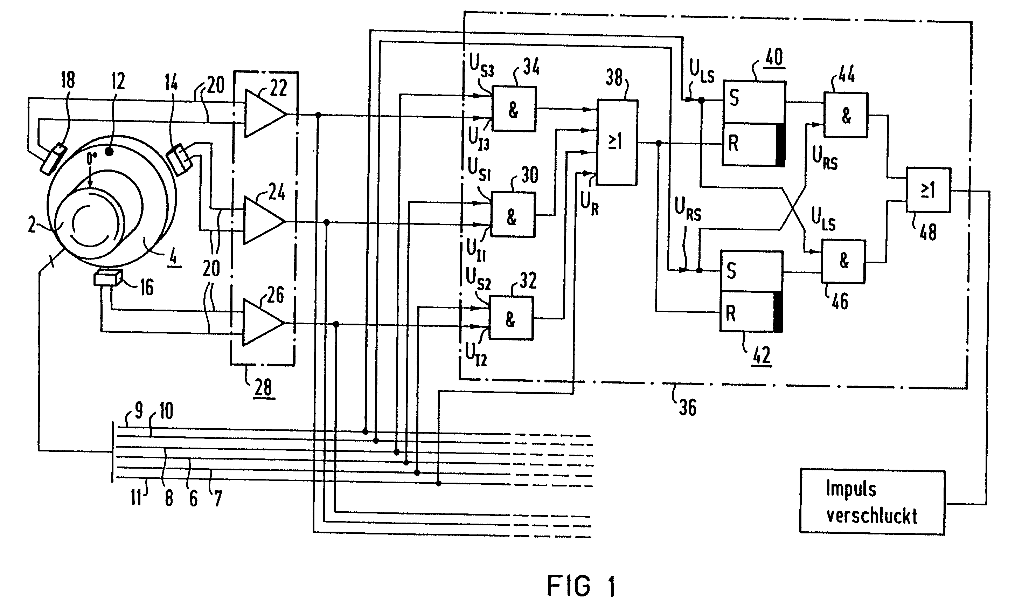

Die FIG 1 zeigt einen Lagegeber 2 und einen Umdrehungsgeber 4, die starr mechanisch miteinander verbunden sind. Der Lagegeber 2 möge beispielsweise als optischer Drehgeber ausgebildet sein, der demzufolge eine Vielzahl von binär kodierten optischen lesbaren Spuren aufweist, von denen drei Spuren dargestellt sind.

Die erste Spur würde demzufolge innerhalb eines Winkelbereichs von 0° (durch einen Pfeil angedeutet) bis 120° ein Binärsignal logisch "1" und von 120° bis 360° ein Binärsignal logisch "0" führen, die zweite Spur würde von 0° bis 120° ein Binärsignal logisch "0", von 120° bis 240° ein Signal logisch "1" und von 240° bis 360° ein Signal logisch "0" und die dritte Spur würde von 0° bis 240° ein Signal logisch "0" und von 240° bis 360° ein Signal logisch "1" führen.

Die Ausgangssignale des Lagegebers 2, auch Sektorsignale $U_{S1}$, $U_{S2}$ und $U_{S3}$ genannt, werden auf Leitungen 6, 7 und 8, das linke Sektorrandsignal $U_{LS}$ auf Leitung 9, das rechte Sektorrandsignal $U_{RS}$ auf Leitung 10 und das Resetsignal $U_R$ auf Leitung 11 gegeben, die zusammen ein Leitungssystem bilden. Um die Anzahl der Leitungen 6 bis 11 zu vermindern, können die vom Lagegeber 2 erzeugten Signale in einer beliebigen, beispielsweise 4-bit, Form kodiert werden.

Der Umdrehungsgeber 4 ist prinzipiell als eine Scheibe dargestellt, an der ein Magnet 12 befestigt ist, der während jeweils einer Umdrehung an drei Impulssensoren 14, 16 und 18 vorbeistreicht und bei der Passage gegenüber jeweils einem der Impulsdrahtsensoren 14 bzw. 16 bzw. 18 in diesen jeweils einen Spannungsstoß auslöst, der geschwindigkeitsunabhängig durch den Wiegand-Effekt erfolgt. Diese Spannungsstöße werden über zugehörige Leitungen 20 an Verstärkerschaltungen 22, 24 und 26 einer gestrichelt angedeuteten Impulsaufbereitungsschaltung 28 geleitet. Aus den Spannungsstößen wird dann jeweils ein zugeordneter, von nachgeschalteten UND-Gattern 30, 32 und 34 einer Schaltungsanordnung 36 zur Durchführung der Verfahrens verarbeitbare Impulssignale $U_{l1}$, $U_{l2}$ und $U_{l3}$ gewonnen, die an den jeweiligen Verstärkerschaltungen 22, 24 und 26 ausgangsseitig anstehen.

Die Schaltungsanordnung 36 enthält außerdem ein ODER-Gatter 38, zwei RS-Flip-Flops 40 und 42, zwei weitere UND-Gatter 44 und 46 und ein weiteres ODER-Gatter 48. Das Impulssignal $U_{l1}$ bzw. $U_{l2}$ bzw. $U_{l3}$ ist dem ersten Eingang des UND-Gatters 30 bzw. 32 bzw. 34 zugeführt. Dem zweiten Eingang des UND-Gatters 30 bzw. 32 bzw. 34 ist mit ein Sektorsignal $U_{S1}$ bzw. $U_{S2}$ bzw. $U_{S3}$ zugeführt. Der Ausgang des UND-Gatters 30 bzw. 32 bzw. 34 ist mit einem Eingang eines nachgeschalteten ODER-Gatters 38 verknüpft, dessen Ausgang jeweils mit einem Reset-Eingang eines ersten RS-Flip-Flops 40 und eines zweiten RS-Flip-Flops 42 verbunden ist. An einem weiteren Eingang des ODER-Gatters 38 ist das vom Lagegeber 2 erzeugte Resetsignal $U_R$ geführt. Dieses Resetsignal $U_R$ setzt beide RS-Flip-Flops 40 und 42 spätestens dann zurück, wenn der zu überwachende Sektor nach rechts oder nach links wieder verlassen wird. Dem Set-Eingang des ersten RS-Flip-Flops 40 wird das linke Sektorrandsignal $U_{LS}$ und dem Set-Eingang des zweiten RS-Flip-Flops 42 wird das rechte Sektorrandsignal $U_{RS}$ zugeführt. Die Ausgänge der beiden RS-Flip-Flops 40 und 42 sind jeweils mit einem Eingang eines nachfolgenden weiteren UND-Gatters 44 und 46 verknüpft. Am zweiten Eingang dieses UND-Gatters 44 bzw. 46 steht das rechte bzw. linke Sektorrandsignal $U_{RS}$ bzw. $U_{LS}$ an, wobei der Ausgang des UND-Gatters 44 bzw. 46 mit einem Eingang eines weiteren ODER-Gatters 48 verbunden ist. Der Ausgang dieses ODER-Gatters 48 ist mit einer Anzeige "impuls verschluckt" verknüpft.

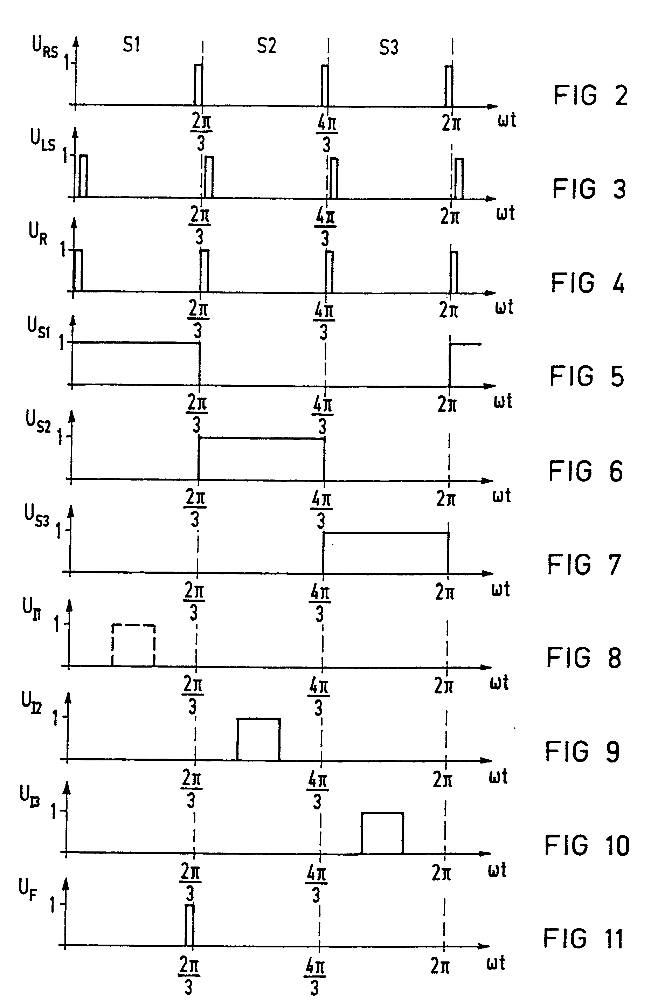

Die Funktionsweise der Schaltungsanordnung 36 zur Durchführung des Verfahren zur Überwachung der Impulsdrahtsensoren 14, 16 und 18 des Umdrehungsgebers 4 auf Sensorleitungskurzschluß wird anhand der FIG 2 bis 11 näher erläutert.

Bei einer vollen Umdrehung des Umdrehungsgebers 4 im Uhrzeigersinn erhält man an den Ausgängen der Verstärker 22, 24 und 26 der Impulsaufbereitungsschaltung 28 nacheinander folgende Impulssignale $U_{l1}$, $U_{l2}$ und $U_{l3}$, die in den FIG 8 bis 10 im einem Diagramm über der Periode $2\pi$ aufgetragen sind. Das Impulssignal $U_{l1}$ bzw. $U_{l2}$ bzw. $U_{l3}$ ist im Sektor S1 bzw. S2 bzw. S3 angeordnet. Das Impulssignal $U_{l1}$ ist gestrichelt dargestellt, womit angedeutet werden soll, daß dieses Impulssignal $U_{l1}$ im Fehlerfall nicht vorhanden ist. Als Kennzeichnung der Sektoren S1, S2 und S3 liefert der Lagegeber 2 folgende Sektorsignale $U_{S1}$, $U_{S2}$ und $U_{S3}$, die in den FIG 5 bis 7 in einem Diagramm über der Periode $2\pi$ dargestellt sind, und ein rechtes bzw. linkes Sektorrandsignal $U_{RS}$ bzw. $U_{LS}$, das in der FIG 2 bzw. 3 in einem Diagramm über der Periode $2\pi$ dargestellt ist. Zwischen einem rechten und nachfolgenden linken Sektorrandsignal $U_{RS}$ und $U_{LS}$ erzeugt der Lagegeber 2 auch noch ein Resetsignal $U_R$, das in der FIG 4 in einem Diagramm über der Periode $2\pi$ dargestellt ist.

Das UND-Gatter 30 bzw. 32 bzw. 34 vergleicht das Impulssignal $U_{l1}$ bzw. $U_{l2}$ bzw. $U_{l3}$ mit dem Sektorsignal $U_{S1}$ bzw. $U_{S2}$ bzw. $U_{S3}$. Solange das Impulssignal $U_{l1}$ bzw. $U_{l2}$ bzw. $U_{l3}$ in dem Sektor S1 bzw. S2 bzw. S3 kodiert durch das Sektorsignal $U_{S1}$ bzw. $U_{S2}$ bzw. $U_{S3}$ erzeugt wird, erscheint am Ausgang des UND-Gatters 30 bzw. 32 bzw. 34 ein Signal logisch "1", wodurch am Ausgang des nachgeschalteten ODER-Gatters 38 ein Signal logisch "1" erzeugt wird. Durch dieses Ausgangssignal werden die RS-Flip-Flops 40 und 42 in die Ausgangslage zurückgesetzt. Damit wechselt das Ausgangssignal des RS-Flip-Flops 40 bzw. 42 von logisch "1" in logisch "0". Am Ende eines jeden Sektors S1,..., Sn vergleicht das weitere UND-Gatter 44 bzw. 46 das Ausgangssignal des RS-Flip-Flops 40 bzw. 42 mit dem rechten bzw. linken Sektorrandsignal $U_{RS}$ bzw. $U_{LS}$. D.h. das erste RS-Flip-Flop 40 mit dem nachgeschalteten UND-Gatter 44 fragen die aufeinanderfolgenden Sektoren S1,..., Sn bei einer Rechtsdrehung des Umdrehungsgebers 4 und das zweite RS-Flip-Flop 42 und das nachgeschaltete UND-Gatter 46 fragen die aufeinanderfolgenden Sektoren Sn,..., S1 bei einer Linksdrehung des Umdrehungsgebers 4 ab. Wenn in jedem Sektor S1,..., Sn ein korrespondierendes Impulssignal $U_{l1}$,..., $U_{ln}$ vom Umdrehungsgeber 4 erzeugt und an den Ausgängen der Impulsaufbereitungsschaltung 28 anstehen, erzeugt das UND-Gatter 44 bzw. 46 ein Signal logisch "0", wodurch auch am Ausgang des nachfolgenden ODER-Gatters 48 ein Signal logisch "0" ansteht. Dadurch wird die Anzeige "impuls verschluckt" nicht angesteuert.

Wenn nun infolge eines Sensorleitungskurzschlusses das erzeugte Impulssignal $U_{l1}$ nicht am Ausgang des Verstärkers 22 der Impulsaufbereitungsschaltung 28 ansteht, gekennzeichnet durch die gestrichelte Darstellung in FIG. 8, ändert sich das Ausgangssignal des ODER-Gatters 38 nicht von einem Signal logisch "0" in ein Signal logisch "1". Dadurch werden die RS-Flip-Flops 40 und 42 nicht in die Ausgangsstellung zurückgesetzt. Am Ende des Sektors S1 steht bei einer Rechtsdrehung bzw. Linksdrehung des Umdrehungsgebers 4 am Ausgang des RS-Flip-Flops 40 bzw. 42 ein Signal logisch "1" an. Das nachfolgende UND-Gatter 44 bzw. 46 vergleicht dieses Signal mit dem rechten bzw. linken Sektorrandsignal $U_{RS}$ bzw. $U_{LS}$ und erzeugt an seinem Ausgang ein Signal logisch "1" bzw. ein Signal logisch "1". Dadurch ändert sich auch das Signal am Ausgang des weiteren ODER-Gatters 48 von einem Signal logisch "0" in ein Signal logisch "1". Dieses Signal, auch als Fehlersignal $U_F$ bezeichnet, ist in der FIG 11 in einem Diagramm über der Periode 2 $\pi$ dargestellt. Infolge dieses erzeugten Fehlersignal $U_F$ bei einer Rechtsdrehung bzw. Linksdrehung des Umdrehungsgebers 4 wird die Anzeige "Impuls verschluckt" angesteuert. Damit die Anzeige "Impuls verschluckt" über mehr als eine Periode 2 $\pi$ angesteuert werden kann, muß das Fehlersignal $U_F$ abgespeichert werden.

Somit wird mit dieser Schaltungsanordnung 36 jeder Impulsdrahtsensor 14, 16 und 18 des Umdrehungsgebers 4 bei beliebigen Drehrichtungen und dessen Sensorleitungen 20 auf Sensorleitungskurzschluß überwacht, wobei die Überwachung pro Umdrehung durchgeführt wird. D.h. die Schaltungsanordnung 36 kann innerhalb einer Umdrehung beliebiger Drehrichtung feststellen, ob alle Impulssignal $U_{I1}$,..., $U_{In}$ an den Ausgängen der Impulsaufbereitungsschaltung 28 anstehen. Bei einem Ausbleiben eines Impulssignals kann der Absolutweg mit Hilfe des Umdrehungsgebers 4 und des Lagegebers 2 nicht mehr eindeutig bestimmt werden.

## Patentansprüche

1. Verfahren zur Überwachung eines aus n Impulsdrahtsensoren (14, 16, 18) bestehenden, starr mit einem Lagegeber (2) verbundenen Umdrehungsgebers (4) auf Sensorleitungsbruch, wobei jeder Impulsdrahtsensor (14, 16, 18) pro Umdrehung ein Impulssignal ($U_{I1}$,..., $U_{In}$) und der Lagegeber (2) pro Umdrehung n Sektorsignale ($U_{S1}$,..., $U_{Sn}$) mit jeweils einem linken bzw. rechten Sektorrandsignal ($U_{LS}$ bzw. $U_{RS}$) und einem Resetsignal ($U_R$) erzeugen, wobei jedes Sektorsignal ($U_{S1}$,..., $U_{Sn}$) einen der n Sektoren (S1,..., Sn) einer Umdrehung kodiert, **dadurch gekennzeichnet,** daß jeweils während einer Umdrehung jeder Sektor (S1,..., Sn) auf Vorhandensein seines korrespondierenden Impulssignals ($U_{I1}$,..., $U_{In}$) untersucht wird, wobei eine Anzeige angesteuert wird, sobald eines der n Impulssignale ($U_{I1}$,..., $U_{In}$) nicht vorhanden ist.

2. Schaltungsanordnung (36) zur Durchführung des Verfahrens nach Anspruch 1 mit einem aus n Impulsdrahtsensoren (14, 16, 18) bestehenden, starr mit einem Lagegeber (2) verbundenen Umdrehungsgeber (4), wobei jeder Impulsdrahtsensor (14, 16, 18) pro Umdrehung ein Impulssignal ($U_{I1}$,..., $U_{In}$) und der Lagegeber (2) pro Umdrehung n Sektorsignale ($U_{S1}$,..., $U_{Sn}$) mit jeweils einem linken bzw. rechten Sektorrandsignal ($U_{LS}$ bzw. $U_{RS}$) und einem Resetsignal ($U_R$) erzeugen, **dadurch gekennzeichnet,** daß jedes Sektorsignal ($U_{S1}$, ..., $U_{Sn}$) einem ersten Eingang eines UND-Gatters (30, 32, 34) zugeführt ist, wobei an dessen zweitem Eingang jeweils ein Impulssignal ($U_{I1}$,..., $U_{In}$) ansteht, daß die Ausgänge der n UND-Gatter (30, 32, 34) jeweils mit einem Eingang eines nachfolgenden ODER-Gatters (38) verknüpft sind, wobei einem weiteren Eingang des ODER-Gattes (38) das Resetsignal ($U_R$) zugeführt ist, daß ein erstes und ein zweites RS-Flip-Flop (40, 42) vorgesehen sind, deren Reset-Eingänge (R) mit dem Ausgang des ODER-Gatters (38) verknüpft sind, wobei am Set-Eingang (S) des ersten RS-Flip-Flops (40 das linke Sektorrandsignal ($U_{LS}$) und am Set-Eingang (S) des zweiten RS-Flip-Flops (42) das rechte Sektorrandsignal ($U_{RS}$) ansteht, daß dem ersten bzw. dem zweiten RS-Flip-Flop (40 bzw. 42) ein UND-Gatter (44, 46) nachgeschaltet ist, an dessen zweitem Eingang das rechte bzw. linke Sektorrandsignal ($U_{RS}$ bzw. $U_{LS}$) ansteht, und daß die Ausgänge dieser UND-Gatter (44, 46) jeweils mit einem Eingang eines nachgeschalteten ODER-Gatters (48) verknüpft sind, dessen Ausgang mit einer Anzeige verbunden ist.

## Claims

1. A method for monitoring a rotation sensor (4), rigidly connected to a position sensor (2), and consisting of n pulse wire sensors (14, 16, 18) on a sensor open-circuit, wherein each pulse wire sensor (14, 16, 18) generates per revolution a pulse signal ($U_{I1}$,...,$U_{In}$) and the position sensor (2) generates per revolution n sector signals ($U_{S1}$,...,$U_{Sn}$) with in each case a left or right sector edge signal ($U_{LS}$ or $U_{RS}$) and a reset signal ($U_R$), wherein each sector signal ($U_{S1}$,..., $U_{Sn}$) codes one of the n sectors (S1,..., Sn) of a revolution, characterised in that in each case during one revolution of each sector (S1,..., Sn) the presence of its corresponding pulse signal ($U_{I1}$,..., $U_{In}$) is examined, wherein an indicator is triggered as soon as one of the n pulse signals ($U_{I1}$,..., $U_{In}$) is not present.

2. A circuit arrangement (36) for carrying out the method according to claim 1 with a rotation sensor (4), rigidly connected to a position sensor (2) and consisting of n pulse wire sensors (14, 16, 18), wherein each pulse wire sensor (14, 16, 18) generates per revolution a pulse signal ($U_{I1}$,..., $U_{In}$) and the position sensor (2) generates per revolution n sector signals ($U_{S1}$,..., $U_{Sn}$), with in each case a left or right sector edge signal ($U_{LS}$ or $U_{RS}$) and a reset signal ($U_R$), characterised in that each sector signal ($U_{S1}$,..., $U_{Sn}$) is supplied to a first input of an AND-gate (30, 32, 34), wherein in each case there is provided at its second input a pulse signal ($U_{I1}$,..., $U_{In}$), in that the outputs of the n AND-gates (30, 32, 34) in each case are connected to an input of a subsequent OR-gate (38), wherein the reset signal ($U_R$) is supplied to a further input of the OR-gate (38), in that a first and a second RS-flip-flop (40, 42) are provided, the reset inputs (R) of which are linked to the output of the OR-gate (38), wherein at the set input (S) of the first RS-flip-flop (40) there is provided the left sector edge signal ($U_{LS}$) and at the set input (S) of the second RS-flip-flops (42) there is provided the right sector edge signal ($U_{RS}$), in that an AND-gate (44, 46) is connected after the first or the second RS-flip-flop (40 or 42), at the second input of which there is provided the right or left sector edge signal ($U_{RS}$ or $U_{LS}$) and in that the outputs of these AND-gates (44, 46) are connected in each case to an input of a subsequent OR-gate (48), the output of which is connected to a display.

## Revendications

1. Procédé pour contrôler la rupture éventuelle d'une ligne d'un capteur dans un détecteur tachymétrique (4) constitué par n capteurs à impulsions (14,16,18) raccordés par des fils et relié rigidement à un capteur de position (2), selon lequel chaque capteur à impulsions (14, 16, 18) raccordé à un fil produit lors de chaque rotation un signal impulsionnel ($U_{I1},...,$ $U_{In}$) et le capteur de position (2) produit, pour chaque rotation, n signaux de secteurs ($U_{S1},..., U_{Sn}$) avec respectivement un signal de limite de secteur de gauche ou de droite ($U_{LS}$ ou $U_{RS}$) et un signal de remise à l'état initial ($U_R$), chacun de ces signaux de secteurs ($U_{S1},..., U_{Sn}$) codant l'un des n secteurs (S1,..., Sn) d'une rotation, caractérisé par le fait que respectivement pendant une rotation, on examine chaque secteur (S1,..., Sn) pour déterminer la présence éventuelle d'un signal impulsionnel correspondant ($U_{I1},..., U_{In}$), auquel cas un dispositif d'affichage est commandé dès que l'un des n signaux impulsionnels ($U_{I1},..., U_{In}$) est absent.

2. Montage selon la revendication 1, pour contrôler la rupture éventuelle d'une ligne d'un capteur dans un détecteur tachymétrique (4) constitué par n capteurs à impulsions (14, 16, 18) raccordés par des fils et relié rigidement à un capteur de position (2), selon lequel chaque capteur à impulsions (14, 16, 18) raccordé à un fil produit lors de chaque rotation un signal impulsionnel ($U_{I1},..., U_{In}$) et le capteur de position (2) produit, pour chaque rotation, n signaux de secteurs ($U_{S1},..., U_{Sn}$) avec respectivement un signal de limite de secteur de gauche ou de droite ($U_{LS}$ ou $U_{RS}$) et un signal de remise à l'état initial ($U_R$), caractérisé par le fait que chaque signal de secteur ($U_{S1},..., U_{Sn}$) est envoyé à une première entrée d'une porte ET (30, 32, 34), à la seconde entrée duquel est appliqué respectivement un signal impulsionnel ($U_{I1},..., U_{In}$), que les sorties des n portes ET (30, 32, 34) sont raccordées respectivement à une entrée d'une porte OU (38) branchée en aval, le signal de remise à l'état initial ($U_R$) étant envoyé à une autre entrée de la porte OU (38), qu'il est prévu des première et seconde bascules bistables de type RS (40, 42), dont les entrées de remise à l'état initial (R) sont raccordées à la sortie de la porte OU (38), le signal de gauche de limite de secteur ($U_{LS}$) étant appliqué à l'entrée de positionnement (S) de la première bascule bistable de type RS (40) et le signal de limite de droite de secteur ($U_{LS}$) étant appliqué à l'entrée de positionnement (S) de la seconde bascule bistable de type RS (42), qu'en aval de la première ou de la seconde bascule bistable de type RS (40 ou 42) est branchée une porte ET (44, 46), à la seconde entrée de laquelle est appliqué le signal de limite de droite ou de gauche de secteur ($U_{RS}$ ou $U_{LS}$), et que les sorties de ces portes ET (44, 46) sont raccordées respectivement à une entrée d'une porte OU (48) branchée en aval, dont l'entrée est raccordée à un dispositif d'affichage.

FIG 1

Impuls verschluckt

FIG 2

FIG 3

FIG 4

FIG 5

FIG 6

FIG 7

FIG 8

FIG 9

FIG 10

FIG 11